# EUROPÄISCHE PATENTANMELDUNG

(11) **EP 3 214 281 A1**
(43) Veröffentlichungstag der Anmeldung: **06.09.2017**
(21) Anmeldenummer: 17000285.1
(22) Anmeldetag: 23.02.2017
(51) Int. Cl.: F01N 3/00, F01N 9/00

(54) **ABGASSTRANG UND VERFAHREN ZUR WASSERGEWINNUNG AUS EINEM ABGASSTROM**

(30) Priorität: 01.03.2016 DE 102016002378
(71) Anmelder: VOLKSWAGEN AKTIENGESELLSCHAFT, 38440 Wolfsburg (DE)
(72) Erfinder: Käppner, Christoph, 38118 Braunschweig (DE); Gonzalez, Nuria Garrido, 38100 Braunschweig (DE)
(74) Vertreter: Kirschner, Sebastian

(57) **Zusammenfassung**

Die Erfindung betrifft ein Verfahren und einen Abgasstrang (1) mit einem Abgaskondensator (2) zur Gewinnung von Wasser aus einem Abgasstrom, wobei der Abgasstrang (2) zwei Teilstränge (4, 5) aufweist, wobei in dem einen Teilstrang (5) der Abgaskondensator (2) angeordnet ist.

Die Kondensation ist dadurch verbessert, dass der durch den Abgaskondensator (2) strömende Abgasstrom mittels mindestens einer Abgasklappe (8,9) regelbar und/oder steuerbar ist.

## Beschreibung

Die Erfindung betrifft einen Abgasstrang zur Wassergewinnung aus einem Abgasstrom, mit den Merkmalen des Oberbegriffs des Patentanspruchs 1.

Die Erfindung betrifft ferner ein Verfahren zur Wassergewinnung aus einem Abgasstrom, mit den Merkmalen des Oberbegriffs des Patentanspruchs 5.

Es ist bekannt, zur Leistungssteigerung von Verbrennungsmotoren eine Wassereinspritzung vorzunehmen. Es wird dabei Wasser in den Ansaugtrakt des Verbrennungsmotors eingespritzt. Das verdunstende Wasser hat eine kühlende Wirkung und vermindert die Verdichtungsarbeit. Das in den Ansaugtrakt eingespritzte Wasser bewirkt durch die aufzubringende Verdunstungswärme eine effektive Ladeluftkühlung und ermöglicht ferner eine Innenkühlung des Verbrennungsmotors. Durch die kältere Verbrennungsluft und damit deren höhere Dichte ergibt sich eine Leistungssteigerung.

Um ein Nachfüllen eines Wassertanks durch den Benutzer eines Kraftfahrzeugs zu vermeiden, ist im Stand der Technik bereits vorgeschlagen worden, aus dem Abgasstrom des Verbrennungsmotors Wasser zu gewinnen und dieses zur Wassereinspritzung zu verwenden. Durch die Gewinnung des Wassers aus dem Abgasstrom unabhängig vom Nachfüllen eines Wassertanks ist eine Wassereinspritzung auch für einen Kraftfahrzeugmassenmarkt tauglich. Als Verbrennungsprodukt von Benzin wird Wasserdampf erzeugt. Das Abgas eines Ottomotors beinhaltet beispielsweise in der Masse 10 % Wasserdampf und mit einer entsprechenden Abkühlung unter den Taupunkt, das heißt unterhalb von 53° C kann dieser Dampf kondensieren.

Aus der gattungsbildenden US 3,608,529 sind ein gattungsbildender Abgasstrang und ein gattungsbildendes Verfahren zur Wassergewinnung aus einem Abgasstrom bekannt. Der Abgasstrang ist einem Verbrennungsmotor mit mindestens einem Zylinder einem in dem Zylinder beweglichen Kolben nachgeordnet. In den Zylinder wird ein Kraftstoff eingespritzt und der Kraftstoff verbrennt in dem Zylinder unter Zugabe von reinem Sauerstoff. Das entstehende Abgas wird durch den Abgasstrang geleitet. Ferner wird eine Wassereinspritzung in den Zylinder vorgenommen. Als Kraftstoff wird entweder Benzin oder Wasserstoff verwendet. In beiden Fällen wird als stickstofffreies Oxidationsmittel reiner Sauerstoff verwendet. Wenn als Kraftstoff Wasserstoff dient, ist das einzige Verbrennungsprodukt Wasser und bei der Verwendung von flüssigem Benzin sind die Verbrennungsprodukte Wasser, Kohlendioxid und andere Stoffe, die aber keine Verunreinigungen verursachen sollen. Das einzuspritzende Wasser wird aus dem Abgasstrom des Verbrennungsmotors wiedergewonnen, so dass keine großen Wassermengen in einem entsprechenden Tank gespeichert zu werden brauchen. Der Abgasstrang weist nun einen Abgaskondensator auf. Der Abgaskondensator ist in einem Teilstrang angeordnet, wobei ein weiterer Teilstrang einen anderen Teil des Abgasstromes parallel zu dem Abgaskondensator ins Freie leitet. In dem Kondensator ist eine Kühlschlange angeordnet, die von einem Kühlmittel des Motors durchströmt wird. Wenn nun der Abgasstrom mit der Kühlschlange in Kontakt gerät, so kondensiert das Wasser aus dem Abgasstrom aus und wird zunächst im Kondensator gesammelt und von da aus über eine Leitung zu einem Tank weitergeleitet. Aus dem Tank kann mittels einer Pumpe über ein Drosselventil zu Wassersprühdüsen gefördert werden.

Die gattungsbildende Anordnung und das gattungsbildende Verfahren sind noch nicht optimal ausgebildet. Zumindest diejenigen Teile des Kondensators, die von der Umgebungsluft gekühlt werden, werden durch das durchströmende Abgas erhitzt. Wenn der Abgaskondensator ständig durchströmt wird, kondensiert dadurch nicht mehr so viel Wasserdampf, wie zu Beginn, wenn der Kondensator erstmals nach einem Start des Kraftfahrzeugs durchströmt wird. Zu Beginn sind alle von der Umgebungsluft gekühlten Wandbereich kalt, wobei die Temperatur unter dem Taupunkt liegt. Obwohl die Temperatur des gesamten Abgases noch nicht den Taupunkt erreicht hat, wird durch den Kontakt mit solchen kalten Wänden schon Wasserdampf kondensiert. Wenn nun ein stationärer Betriebspunkt erreicht wird, dadurch dass ständig der Abgaskondensator mit dem Abgasstrom durchströmt wird, liegt die Temperatur der Wände am Eintritt des Kondensators oberhalb des Taupunkts und man gewinnt weniger Wasser. Die Strömung des Abgases durch den Kondensator verursacht ferner Druckverluste. Höhere Temperaturen im stationären Betrieb des Kondensators führen zu einer schlechteren Wasserqualität, da der Säureanteil im Vergleich zu Beginn der Kondensation erhöht ist. Ferner ist der Einsatz eines separaten Kühlmittels, beispielsweise von Wasser aufwändig.

Der Erfindung liegt daher die Aufgabe zugrunde, das eingangs genannte Verfahren und die eingangs genannte Anordnung derart auszugestalten und weiterzubilden, so dass die Kondensation verbessert ist.

Diese der Erfindung zugrunde liegende Aufgabe wird nun durch einen Abgasstrang mit den Merkmalen des Patentanspruches 1 und durch ein Verfahren mit den Merkmalen des Patentanspruches 5 gelöst.

Der durch den Abgaskondensator strömende Abgasstrom ist mittels mindestens einer Abgasklappe steuerbar und/oder regelbar. Durch diese Steuerung und/oder Regelung wird der Abgaskondensator nicht ständig mit Abgas durchströmt, sondern sobald ein stationärer Punkt erreicht wird, kann die Abgasklappe zumindest teilweise geschlossen werden und die Wände des Kondensators werden durch das strömende Kühlmittel abgekühlt.

Danach öffnet wieder die Abgasklappe und durch den Kontakt mit den kalten Wänden wird mehr Kondensat gesammelt. Hierdurch ergeben sich mehrere Vorteile. Zum einen ist die Kondensationsrate erhöht. Durch eine diskontinuierliche Strömung erkaltet der Abgaskondensator schneller und die Kondensation ist größer als bei einer kontinuierlichen Strömung. Das Kondensat wird bei niedrigeren Temperaturen gewonnen und beinhaltet daher mehr Wasser, das heißt die Säuren sind stärker verdünnt. Die Qualität des gesammelten Kondensats ist verbessert.

Ein weiterer Vorteil ist, dass mittels der mindestens einen Abgasklappe Druckverluste vermindert werden können. Beispielsweise können die Abgasklappe oder die Abgasklappen in Abhängigkeit von dem aktuellen Abgasdurchsatz zumindest teilweise geöffnet oder geschlossen werden. Es ist eine variable Regelung der Strömung durch den Abgaskondensator möglich.

Als Kühlmittel wird insbesondere ein Luftstrom genutzt. Dies hat den Vorteil, dass der Abgaskondensator nicht mit einem Kühlmittelkreislauf gekoppelt werden muss. Der Aufbau ist vereinfacht. Der Abgaskondensator kann insbesondere unter dem Boden des Kraftfahrzeugs angeordnet sein. Der Abgaskondensator weist vorzugsweise mehrere beabstandete Leitungen auf, die von dem Luftstrom außen gekühlt werden, wobei die Leitungen innen vom Abgasstrom durchströmt werden.

Stromaufwärts des Abgaskondensators ist in dem Teilstrang mit dem Abgaskondensator eine erste Abgasklappe angeordnet. Hierdurch kann der Abgaskondensator von dem heißen Abgas abgeschirmt werden, wodurch die Abkühlung des Abgaskondensators gefördert wird.

In dem anderen Teilstrang ist insbesondere eine zweite Abgasklappe angeordnet. Hierdurch kann der Abgasgegendruck eingestellt werden und auch der Abgasstrom durch den Abgaskondensator besser geregelt oder gesteuert werden. Wenn die dem Abgaskondensator zugeordnete, erste Abgasklappe geöffnet ist, ist die dem anderen Teilstrang zugeordnete, zweite Abgasklappe zumindest teilweise geschlossen, damit ein entsprechender Teil des Abgasstromes durch den Abgaskondensator geleitet wird. Es ist nicht unbedingt notwendig, diese dem anderen Teilstrang zugeordnete, zweite Abgasklappe vollständig zu schließen, es kann ausreichen den Abgasstrom durch den anderen Teilstrang lediglich zu drosseln durch teilweises Schließen der zweiten Abgasklappe.

Wenn die dem Abgaskondensator zugeordnete, erste Abgasklappe nun in einem nächsten Schritt geschlossen wird, so wird die dem anderen Teilstrang zugeordnete, zweite Abgasklappe weiter geöffnet. Hierdurch sinkt der Abgasgegendruck, wenn der Abgaskondensator nicht durchströmt wird. Eine ständige Durchströmung des Abgaskondensators würde einen stetig erhöhten Abgasgegendruck bedingen, da hierbei die dem anderen Teilstrang zugeordnete, zweite Abgasklappe zumindest teilweise geschlossen wird. Dadurch, dass das Abgas über den als Bypass dienenden anderen Teilstrang ebenfalls geleitet werden kann, kann der Abgasgegendruck verringert werden.

Mittels eines Temperatursensors ist eine Temperatur des Abgaskondensators an mindestens einer Stelle messbar. In Abhängigkeit von der gemessenen Temperatur wird die mindestens eine Abgasklappe betätigt, um gegebenenfalls den Abgaskondensator nicht durch den Abgasstrom zu heizen, sondern lediglich durch den Luftstrom zu kühlen.

Das Verfahren zur Gewinnung von Wasser aus einem Abgasstrom eines Verbrennungsmotors weist nun mehrere Schritte auf. Der Abgasstrom wird durch den Abgasstrang und durch die zwei Teilstränge geleitet. Mittels des in einem der Teilstränge angeordneten Abgaskondensators wird durch Kondensation Wasser, nämlich ein wasserhaltiges Kondensat gewonnen. Der durch den Abgaskondensator strömende Abgasstrom wird mittels mindestens einer Abgasklappe gesteuert und/oder geregelt. Eine Temperatur des Abgaskondensators wird mittels des Temperatursensors gemessen. In Abhängigkeit von der gemessenen Temperatur wird die mindestens eine Abgasklappe betätigt. Die dem Teilstrang mit dem Abgaskondensator zugeordnete erste Abgasklappe wird geöffnet, bis eine mittels eines Sensors gemessene Temperatur des Abgaskondensators unter einen Schwellwert gefallen ist.

In bevorzugter Ausgestaltung sind zwei Abgasklappen im Abgasstrom vorhanden, die das Abgas zwischen einem als Bypass dienenden Teilstrang und dem Abgaskondensator aufteilen. Wenn die dem Abgaskondensator zugeordnete erste Abgasklappe geöffnet wird, wird der Abgaskondensator mit Abgas durchströmt. Die Temperatur an den Wänden steigt bis zu einem stationären Punkt. Ist dieser stationäre Punkt erreicht, wird die erste Abgasklappe geschlossen und die andere, zweite Abgasklappe wird geöffnet, wodurch die Wände des Abgaskondensators schnell wieder kalt werden. Wenn die Wände wieder kalt sind, wird die dem Abgaskondensator zugeordnete, erste Abgasklappe wieder geöffnet. Auf diese Weise wird die Kondensation unterstützt.

Die eingangs genannten Nachteile sind daher vermieden, entsprechende Vorteile sind erzielt.

Es gibt nun eine Vielzahl von Möglichkeiten, den erfindungsgemäßen Abgasstrang und das erfindungsgemäße Verfahren auszugestalten und weiterzubilden. Hierfür darf zunächst die dem Patentanspruch 1 und dem Patentanspruch 5 nachgeordneten Patentansprüche verwiesen werden. Im Folgenden wird eine bevorzugte Ausgestaltung der Erfindung anhand der Zeichnung und der dazugehörigen Beschreibung näher erläutert. In der Zeichnung zeigt:
- Fig. 1: in einer stark schematischen Darstellung einen Teil eines Abgasstrangs mit einem Abgaskondensator,
- Fig. 2: ein Ablaufdiagramm zur Steuerung oder Regelung mindestens einer Abgasklappe im Abgasstrang,
- Fig. 3: in einem schematischen Diagramm eine theoretische Kondensationsrate und zwei Messpunkte aufgetragen über der Temperatur,
- Fig. 4: in einem schematischen Diagramm die Temperatur an zwei Stellen des Abgasstrangs aufgetragen über der Zeit, und
- Fig. 5: in einem schematischen Diagramm ein Abgasgegendruck aufgetragen über der Zeit.

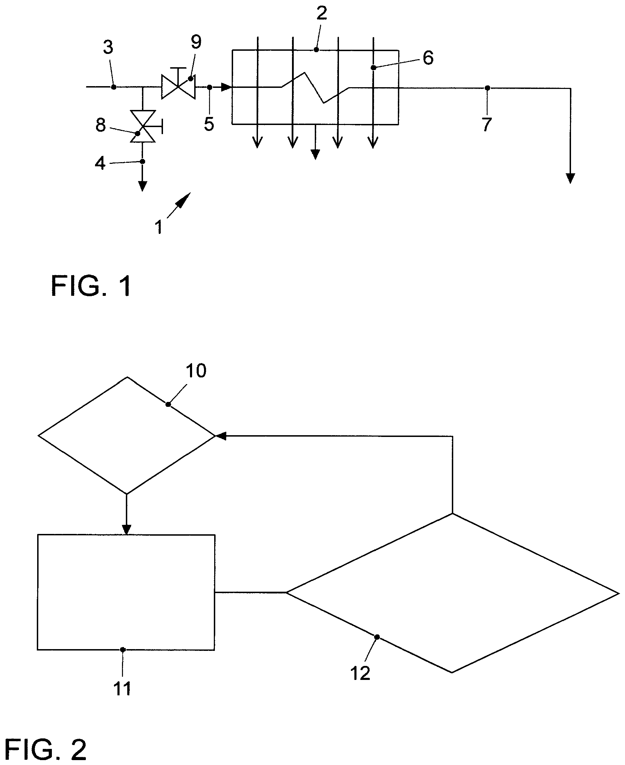

In Fig. 1 ist ein Teil eines Abgasstrang 1 zu erkennen. Der Abgasstrang 1 weist einen Abgaskondensator 2 auf. Über den Abgasstrang 1 wird das Abgas eines Verbrennungsmotors eines Kraftfahrzeuges abgeführt. Als Kraftstoff wird vorzugsweise Benzin, Diesel oder Biodiesel verwendet. Im Verbrennungsmotor wird ein Kraftstoff-LuftGemisch verbrannt.

Der Abgasstrang 1 weist eine gemeinsame Zuleitung 3 auf, die sich bis zu einer nicht näher bezeichneten Verzweigungsstelle erstreckt. Ausgehend von der Verzweigungsstelle verzweigt der Abgasstrang 1 in zwei Teilstränge 4, 5. Mittels des Teilstrangs 5 wird der Abgasstrom zu dem Abgaskondensator 2 geleitet. Über den anderen Teilstrang 4 wird das Abgas nicht zum Abgaskondensator 2, sondern vorzugsweise über eine Auspuffanlage ins Freie geleitet. Weitere Komponenten - wie beispielsweise ein Katalysator - des Abgasstranges 1 zur Abgasnachbehandlung oder zur Wärmerückgewinnung sind hier nicht dargestellt, können jedoch ebenfalls vorhanden sein.

Der Abgaskondensator 2 ist mittels eines Kühlmittels 6 kühlbar. Als Kühlmittel 6 wird vorzugsweise ein Luftstrom verwendet. Der Abgaskondensator 2 ist vorzugsweise im Bereich der Abgasanlage, das heißt insbesondere am Boden des Kraftfahrzeugs angeordnet. Wenn das Kraftfahrzeug bewegt wird, wird der Abgaskondensator 2 mittels des Kühlmittels 6, d.h. des Luftstroms gekühlt. Der bei der Fahrt auftretende Luftstrom kühlt den Abgaskondensator 2, wodurch das durch den Abgaskondensator 2 geleitete Abgas abgekühlt wird und ein wasserhaltiges Kondensat innerhalb des Abgaskondensators 2 kondensiert und zur Wassereinspritzung gesammelt werden kann. Nachdem das Abgas den Abgaskondensator 2 durchströmt hat, wird es über eine Leitung 7 in die Umgebung abgeleitet.

Der Abgaskondensator 2 weist vorzugsweise mehrere sich quer zur Längsrichtung des Kraftfahrzeugs erstreckende Leitungen insbesondere mehrere Rohre auf, die in mehreren Lagen übereinande angeordnet sein können. Dies hat den Vorteil, dass eine große von dem Luftstrom angeströmte Oberfläche zur Verfügung gestellt ist. Die Leitungen sind dabei beabstandet zueinander angeordnet und werden von der Luft umströmt.

Die eingangs genannten Nachteile sind nun dadurch vermieden, dass der durch den Abgaskondensator 2 strömende Abgasstrom mittels mindestens einer Abgasklappe 8, 9 regelbar und/oder steuerbar ist. Die zweite Abgasklappe 8 ist dabei in dem Teilstrang 4 angeordnet und die erste Abgasklappe 9 ist in dem Teilstrang 5 angeordnet. Die erste Abgasklappe 9 ist insbesondere vor dem Abgaskondensator 2, das heißt stromaufwärts des Abgaskondensators 2 angeordnet. Wenn die erste Abgasklappe 9 geschlossen wird, so tritt kein heißes Abgas mehr in den Abgaskondensator 2 ein. Der Abgaskondensator 2 wird durch die fortwährende Kühlwirkung des Kühlmittels 6 weiter gekühlt. Hierdurch fällt die Temperatur des Abgaskondensators 2.

Insbesondere wird die Temperatur des Abgaskondensators 2 mittels mindestens eines Temperatursensors an einer Stelle oder an mehreren Stellen gemessen. Der Temperatursensor misst eine Temperatur T_{Wand}. Wie in Fig. 2 dargestellt ist, wird nun die gemessene Temperatur T_{Wand} mit einem Grenzwert T_{Wand1} in einem Verfahrensschritt 11 verglichen. In dem Verfahrensschritt 11 wird geprüft, ob der stationäre Punkt erreicht worden ist. Zu Beginn, beim Starten des Kraftfahrzeugs wird nun zunächst die erste Abgasklappe 9 in dem Verfahrensschritt 10 geöffnet. Die zweite Abgasklappe 8 wird hierbei vorzugsweise zumindest teilweise geschlossen, um einen entsprechend großen Abgasstrom durch den Abgaskondensator 2 zu leiten. Die erste Abgasklappe 9 bleibt geöffnet bis ein stationärer Punkt erreicht wird, das heißt bis die Temperatur des Abgaskondensators 2 eine bestimmte Temperaturschwelle T_{Wand1} überschritten hat oder bis die Abgastemperatur für eine gewisse Zeitspanne oberhalb der Temperaturschwelle T_{Wand1} gelegen hat.

Wenn der stationäre Punkt erreicht worden ist, wird in einem Verfahrensschritt 12 die erste Abgasklappe 9 nun geschlossen und die zweite Abgasklappe 8 wird weiter geöffnet, bis die Temperatur des Abgaskondensators 2 wieder bis auf einen unteren Schwellwert gefallen ist. Hiernach beginnt das Verfahren wieder von vorne und der Verfahrensschritt 11 "Öffnen der Abgasklappe 9" wird durchgeführt. In dem Verfahrensschritt 11 wird vorzugsweise die zweite Abgasklappe 8 zumindest teilweise geschlossen.

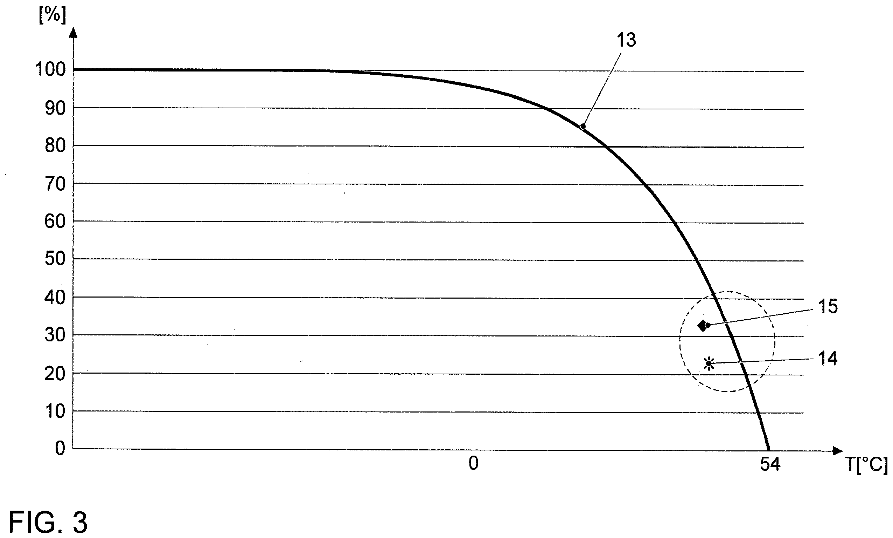

In Fig. 3 ist gut zu erkennen, dass die Kondensationsrate 13 abhängig von der Temperatur T ist. Je niedriger die Temperatur ist, desto höher ist die Kondensationsrate. Durch das wechselnde Öffnen und Schließen der ersten Abgasklappe 9 und damit die Regelung beziehungsweise Steuerung des Abgasstroms durch den Abgaskondensator 2 kann die Kondensationsrate verbessert werden. In Fig. 3 sind zum einen eine theoretische Kondensationsrate 13 sowie zwei Messpunkte 14 und 15 dargestellt. Der Messpunkt 14 ergibt sich nun durch eine Vergleichsmessung, wobei die Abgasklappe 9 ständig geöffnet ist und somit keine zwischenzeitliche Abkühlung des Abgaskondensators 2 durch Unterbrechung des Abgasstroms erfolgte. Zu erkennen ist, dass bei der Messung 15 die Kondensationsrate höher liegt, wobei bei dieser Messung der Abgasstrom durch den Abgaskondensator 2 in Abhängigkeit von der gemessenen Temperatur durch Öffnen und Schließen der ersten Abgasklappe 9 variiert worden ist.

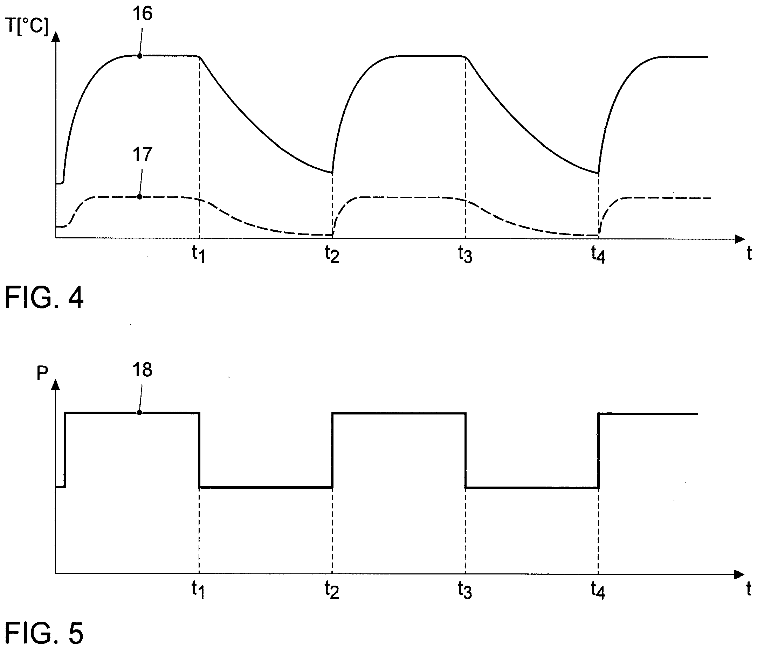

In Fig. 4 sind zwei Temperaturverläufe 16, 17 dargestellt. Der Temperaturverlauf 16 ist an einer ersten Stelle des Abgaskondensators 2 und der Temperaturverlauf ist an einer zweiten Stelle des Abgaskondensators 2 gemessen worden, wobei die zweite Stelle stromabwärts der ersten Stelle angeordnet ist. Der Temperaturverlauf 17 zeigt daher geringere Temperaturen als der Temperaturverlauf 16, da der Abgasstrom zunehmend abkühlt beim Durchströmen des Abgaskondensators 2.

Wie aus der Zusammenschau der Fig. 3 und der Fig. 4 gut ersichtlich ist, steigt die Kondensationsrate mit sinkender Temperatur. Die Kondensationsrate ist dadurch erhöht, dass zu den Zeitpunkten t1 und t3 die Abgasklappe 9 geschlossen wird und so durch die fortwährende Kühlwirkung des Luftstroms die Temperatur bis zum Zeitpunkt t2 beziehungsweise t4 sinkt. Zum Zeitpunkt t2 beziehungsweise t4 wird die erste Abgasklappe 9 wieder geöffnet und das Abgas beginnt wieder durch den Abgaskondensator 2 zu strömen und erwärmt diesen.

Die Abgasklappe 8 wird ebenfalls zum Steuern oder Regeln des Abgasstromes durch den Abgaskondensator 2 genutzt. Bis zum Zeitpunkt t1 und zwischen den Zeitpunkten t2 und t3 ist die zweite Abgasklappe 8 zumindest teilweise geschlossen, so dass ein genügend großer Abgasstrom durch den Abgaskondensator 2 geleitet wird. Es ist nicht zwangsweise notwendig, hierbei die Abgasklappe 8 vollständig zu schließen, sondern die Abgasklappe 8 drosselt lediglich der Abgasstrom durch den Teilstrang 4, wodurch der Abgasstrom durch den Teilstrang 5 mit dem Abgaskondensator 2 erhöht wird.

In den Zeiträumen t1 bis t2 und t3 bis t4 wird die zweite Abgasklappe 8 weiter, insbesondere vollständig geöffnet, so dass nun der Abgasstrom vollständig durch den Teilstrang 4 abgeleitet werden kann. In Fig. 5 ist dargestellt, dass der Abgasgegendruck 18 in den Zeiträumen zwischen t1 und t2 und zwischen t3 und t4 sinkt, dadurch dass die Abgasklappe 8 hierbei weiter geöffnet ist und das Abgas nun nicht mehr durch den Abgaskondensator 2 strömen muss.

Die Erfindung hat den Vorteil, dass die Kondensationsrate erhöht werden kann, wie es in Fig. 3 dargestellt ist. Die Erfindung hat ferner den Vorteil, dass der Abgasgegendruck 18 durch zeitweises Schließen und Öffnen der Abgasklappe 8 beziehungsweise 9 veränderbar ist. Insbesondere kann der Abgasgegendruck 18 in den Zeiträumen t1 bis t2 und t3 bis t4 sinken. Ferner hat die Erfindung den Vorteil, dass die Kondensation bei niedrigeren Temperaturen erfolgt, wodurch der Säureanteil in dem gewonnenen Kondensat sinkt. Insbesondere Schwefelsäure kondensiert bei höheren Temperaturen aus. Daher ist es vorteilhaft, dass die Kondensation bei niedrigeren Temperaturen erfolgt und somit der Schwefelsäureanteil im Kondensat verringert ist.

### BEZUGSZEICHENLISTE

- 1: Abgasstrang
- 2: Abgaskondensator
- 3: Zuleitung
- 4: Teilstrang
- 5: Teilstrang
- 6: Kühlmittel
- 7: Umgebung
- 8: Abgasklappe
- 9: Abgasklappe
- 10: Verfahrensschritt "Öffnen der Abgasklappe"
- 11: Verfahrensschritt "Vergleich, ob stationärer Punkt erreicht ist"
- 12: Verfahrensschritt "Schließen der Abgasklappe"
- 13: theoretische Kondensationsrate
- 14: Messpunkt
- 15: Messpunkt
- 16: Temperaturverlauf
- 17: Temperaturverlauf
- 18: Abgasgegendruck
- t1: Zeitpunkt
- t2: Zeitpunkt
- t3: Zeitpunkt
- t4: Zeitpunkt

## Patentansprüche

1. Abgasstrang (1) mit einem Abgaskondensator (2) zur Gewinnung von Wasser aus einem Abgasstrom, wobei der Abgasstrang (2) zwei Teilstränge (4, 5) aufweist, wobei in dem einen Teilstrang (5) der Abgaskondensator (2) angeordnet ist, **dadurch gekennzeichnet, dass** der durch den Abgaskondensator (2) strömende Abgasstrom mittels mindestens einer Abgasklappe (8,9) regelbar und/oder steuerbar ist.

2. Abgasstrang nach Anspruch 1, **dadurch gekennzeichnet, dass** stromaufwärts des Abgaskondensators (2) in dem Teilstrang (5) eine erste Abgasklappe (9) angeordnet ist.

3. Abgasstrang nach Anspruch 2, **dadurch gekennzeichnet, dass** in dem anderen Teilstrang (4) eine zweite Abgasklappe (8) angeordnet ist.

4. Abgasstrang nach einem der vorstehenden Ansprüche 1 bis 3, **dadurch gekennzeichnet, dass** mittels eines Temperatursensor eine Temperatur des Abgaskondensators (2) messbar ist, wobei in Abhängigkeit von der gemessenen Temperatur die mindestens eine Abgasklappe (8,9) betätigbar ist.

5. Verfahren zur Gewinnung von Wasser aus einem Abgasstrom eines Verbrennungsmotors, wobei der Abgasstrom durch einen Abgasstrang (1) mit zwei Teilsträngen (4, 5) geleitet wird, wobei mittels eines in einem der Teilstränge (5) angeordneten Abgaskondensators (2) Wasser gewonnen wird, **dadurch gekennzeichnet, dass** der durch den Abgaskondensator (2) strömende Abgasstrom mittels mindestens einer Abgasklappe (8, 9) gesteuert und/oder geregelt wird.

6. Verfahren nach einem der vorstehenden Ansprüche, **dadurch gekennzeichnet, dass** eine Temperatur des Abgaskondensators (2) mittels eines Temperatursensors gemessen wird.

7. Verfahren nach dem vorstehenden Anspruch, **dadurch gekennzeichnet, dass** in Abhängigkeit von der gemessenen Temperatur die mindestens eine Abgasklappe (8,9) betätigt wird.

8. Verfahren nach dem vorstehenden Anspruch, **dadurch gekennzeichnet, dass** eine dem Teilstrang (5) mit dem Abgaskondensator (2) zugeordnete erste Abgasklappe (9) geöffnet wird, bis die mittels des Temperatursensors gemessene Temperatur des Abgaskondensators (2) unter einen Schwellwert gefallen ist.

9. Verfahren nach dem vorstehenden Anspruch, **dadurch gekennzeichnet, dass**, wenn die dem Abgaskondensator (2) zugeordnete, erste Abgasklappe (9) geöffnet ist, eine dem anderen Teilstrang (4) zugeordnete, zweite Abgasklappe (8) zumindest teilweise geschlossen wird, wobei, wenn die dem Abgaskondensator (2) zugeordnete erste Abgasklappe (9) geschlossen wird, die dem anderen Teilstrang (4) zugeordnete, zweite Abgasklappe (8) geöffnet wird.

10. Verfahren nach einem vorstehenden Ansprüche, **dadurch gekennzeichnet, dass** der Abgasstrang (1) nach einem der vorstehenden Ansprüche 1 bis 4 ausgebildet ist.
